# EUROPÄISCHE PATENTSCHRIFT

(11) **EP 2 769 824 B1**
(45) Veröffentlichungstag und Bekanntmachung des Hinweises auf die Patenterteilung: **14.11.2018**
(21) Anmeldenummer: 14155564.9
(22) Anmeldetag: 18.02.2014
(51) Int. Cl.: B29C 47/08, B29C 47/88, B29C 47/92, B29C 45/72, B29B 13/06

(54) **VERFAHREN ZUR NUTZUNG DER IN EINEM EXTRUSIONSPROZESS ABGEGEBENEN WÄRMEMENGE**
Method for using the heat emitted in an extrusion process
Procédé d'utilisation de la quantité de chaleur émise lors d'un processus d'extrusion

(30) Priorität: 24.02.2013 DE 102013202997
(43) Veröffentlichungstag der Anmeldung: 27.08.2014
(73) Patentinhaber: battenfeld-cincinnati Germany GmbH, 32547 Bad Oeynhausen (DE)
(72) Erfinder: Dohmann, Heinrich, 37671 Höxter (DE); Jürgensen, Peter Jessen, 3600 Frederikssund (DK)

(56) Entgegenhaltungen:
- EP-A1- 2 407 297
- DE-A1- 2 403 295
- DE-A1-102007 050 949
- US-A1- 2003 029 176
- US-B1- 6 389 828
- US-B1- 6 620 354

## Beschreibung

Die Erfindung betrifft ein Verfahren zum Nutzen der bei einem Extrusionsprozess während des Abkühlvorganges vom Extrudat abgegebenen Wärmemenge zum Trocknen oder Vorwärmen von Kunststoffgranulat, wobei ein Fluid, insbesondere Luft, entgegen der Extrusionsrichtung entlang des Extrudats und/oder durch das Werkzeug geführt wird, mindestens ein Teil der Wärme vom Extrudat und/oder dem Werkzeug an das Fluid übertragen wird, das erwärmte Fluid aus einem ersten Teilbereich der Prozesskette, umfassend wenigstens ein Werkzeug, eine Kalibrier- und Kühleinrichtung und eine Abzugsvorrichtung, über einen Verbindungsbereich, vorzugsweise bestehend aus wenigstens einem Verbindungsrohr, einem zweiten Teilbereich der Prozesskette, umfassend wenigstens eine Saugvorrichtung, zugeführt wird.

Bei der Herstellung von Kunststoffteilen ist es zunächst erforderlich, ein im Allgemeinen als Granulat vorliegenden thermoplastischen Kunststoff zunächst aufzuschmelzen und dann als thermoplastische Formmasse in die gewünschte Endform des Kunststoffteiles zu bringen. Dies kann einerseits durch Einspritzen in eine dafür geeignete Form oder in einem kontinuierlichen Prozess in einem Extrusionsverfahren geschehen. In beiden Fällen ist es erforderlich, dem Kunststoffgranulat zunächst Wärme zuzuführen, um dieses aufzuschmelzen, und anschließend nach der Formgebung dem geformten Kunststoffteil wieder Wärme zu entziehen, damit dieses formstabil bleibt.

Im Zuge der kontinuierlich steigenden Energiekosten ist es daher nicht nur wirtschaftlich, sondern auch unter dem Gesichtspunkt des Umweltschutzes sehr sinnvoll, sich mit Methoden zu beschäftigen, die es ermöglichen, die eingebrachte Energie, die systembedingt dem Prozess wieder entzogen werden muss, so weit wie möglich zu minimieren oder erneut für andere Prozesse zu nutzen.

Die DE 10 2007 050 949 A1 beschäftigt sich bereits mit diesem Thema und schlägt ein Verfahren zur Energienutzung beim Kühlen vom Extrusionsprofilen vor, bei dem Energie in Form von Wärme zum Aufschmelzen des Kunststoffes zugeführt wird und nach der Formgebung mindestens in den Vorrichtungen Werkzeug, Kalibrierung und Kühlbad so lange wieder dem Kunststoff Wärme entzogen wird, bis dieser selbsttragend ist. Erfindungsgemäß ist hierbei vorgesehen, dass ein Kühlmedium zum Kühlen entgegen der Extrusionsrichtung die Extrusionslinie durchläuft, wobei das zur Kühlung verwendete Medium von einer Vorrichtung zur nächsten geführt wird. Es wird also bereits hier eine Art Kreislauf vorgeschlagen, in dem das eingesetzte Kühlmedium von einer Vorrichtung zur nächsten weitergefördert wird, und somit das Kühlmedium von Station zu Station wärmer wird, welches dann beispielsweise zum Heizen oder zur Warmwasserbereitung genutzt werden kann. Auch hier hinter steckt demzufolge bereits der Grundgedanke, die eingebrachte Energie für weitere Prozesse nutzbar zu machen.

Die DE 10 2010 064 412 A1 geht hier bereits einen Schritt weiter und schlägt ein Verfahren zur Aufrechterhaltung des von einem Extrudat an ein Fluid abgegebenen Wärmestroms vor. Hierbei wird ein Fluid, in erster Linie Luft, entgegen der Extrusionsrichtung an einem Kunststoffrohr und durch das das Kunststoffrohr formende Werkzeug geleitet, die dann nach einer entsprechenden Milderung über eine Fluidaustrittsöffnung den Prozess verlässt. Der Kern der Erfindung liegt darin, den Fluidstrom so zu optimieren, dass die größtmögliche Wärmemenge dem Kunststoff entzogen wird, wobei dies über die gesamte Extrudatlänge möglichst an allen Stellen gleich ist, damit ein optimaler Kühlungsprozess erreicht werden kann.

Aus der EP 2 407 297 A1 ist ein Verfahren zum Reinigen der Kühlluft bei der Extrusion von Kunststoffteilen bekannt. Die US6 389 828 B1 offenbart ein Verfahren, bei der die Luft zum Kühlen eines extrudierten Produktes beinflussbar ist. In der US 6 620 354 B1 wird vorgeschlagen die Temperatur des zu granulierenden Materials zu kontrollieren. Die US 2003/0029176 A1 befasst sich allgemein mit dem Kühlen von aus Kunststoff hergestellten Produkten und aus der DT 24 03 295 A1 ist das Vorwärmen von des Materials zur Kunstoffextrusion bekannt.
**Aufgabe** der Erfindung ist es, die in einem Extrusionsprozess abgegebene Wärmemenge möglichst zu 100 Prozent für einen weiteren Prozess nutzbar zu machen, ohne dass der Energieträger, dem diese Wärmemenge zugeführt wurde, in der nachfolgenden Prozesskette Schäden verursachen kann, was beispielsweise bei zu hohen Endtemperaturen des Energieträgers auftreten könnte. Diese Aufgabe wird durch die Merkmale des Anspruchs 1 gelöst.

Durch dieses vorgeschlagene Verfahren wird sichergestellt, dass dem erwärmten Fluid - hier wird in erster Linie Luft zum Einsatz gelangen - immer so viel Fremdfluid - dies wird in der Regel Umgebungsluft sein - der erwärmten Luft beigemischt wird, dass diese nie eine Temperatur erreichen kann, die Schädigungen an Bauteilen des nachfolgenden Prozesses hervorrufen könnten. Es bietet sich nämlich z.B. an, diese durch das Extrudat gezogene Luft zunächst in einem Filter zu reinigen, da der Luft evtl. von der Kunststoffmasse austretende Schadstoffe zugeführt wurden, die man nicht unbedingt direkt wieder an die Umwelt abgeben möchte. Weiterhin könnten in der erwärmten Luft Additive enthalten sein, die ab einem bestimmten Temperaturbereich zur Selbstentzündung neigen könnten. Aus diesem Grund muss sichergestellt werden, dass die erwärmte Luft nicht in einen Temperaturbereich gelangt, bei dem diese beschriebenen Stoffe z.B. in dem erwähnten Filter mit dem Filterflies reagieren und Schäden verursachen. Das Fluid kann dann direkt im anschließenden Trocknungsprozess eingesetzt werden. Ist die Strömungsgeschwindigkeit zu hoch wird sie durch öffnen eines Ablassventils im Übergangsbereich minimiert. Ist die Temperatur für den Trocknungs- oder Vorwärmprozess noch zu hoch, kann ebenfalls im Übergangsbereich eine zusätzliche Fremdluft beigemischt werden.
Um diesen Herunterkühlprozess des erwärmten Fluids zu kontrollieren, ist weiterbildungsgemäß vorgesehen, bevor das Fluid dem zweiten Teilbereich der Prozesskette zugeführt wird, über eine geeignete Temperaturmesseinrichtung die Fluidtemperatur zu messen. Dies kann mittels geeigneten Temperaturfühlern oder sonstigen jeglichen bekannten Temperaturmessgeräten erfolgen. Mittels dieser Kontrollmessung wird das Herunterkühlen des Fluids überwacht und es wird ermöglicht, in den Gesamtprozess eingreifen zu können, falls die gewünschte Fluidtemperatur doch nicht erreicht wurde.

Das Messen der Fluidtemperatur, bevor das Fluid dem zweiten Teilbereich zugeführt wird, hat aber auch noch den Vorteil, dass, sofern zusätzlich die Fluidtemperatur am Ausgang des ersten Teilbereiches gemessen wird, die Menge der zuzuführenden Fremdluft gesteuert oder geregelt werden kann. Durch diese Temperaturmessung ist nämlich bekannt, mit welcher Temperatur das Fluid den ersten Teilbereich verlässt und, bedingt durch die vorgegebene Maximaltemperatur mittels bekannter Regelungstechnik, bestimmbar, wie groß die Menge der erforderlichen Fremdluft ist. Hierbei ist es auch von Vorteil, die Temperatur der Fremdluft aufzunehmen, denn je wärmer die Fremdluft selbst ist, desto mehr Fremdluft muss selbstverständlich dem erwärmten Fluid beigemischt werden. Je nach Einsatzgebiet kann es erforderlich sein, diese Fremdluft über geeignete Mittel vorzukühlen, um die gewünschte Abkühlung des erwärmten Fluids erreichen zu können. Die Steuerung der Fremdluftzufuhr kann über ein regelbares Absperrventil, aber auch über simple Klappen realisiert werden. Hierbei ist es ohne weiteres denkbar, die Fremdluftmenge über eine manuell verschiebbare Klappe, die beispielsweise zu 25, 50 oder 100 Prozent geöffnet werden kann, zu bestimmen. Selbstverständlich ist die Fremdluftmenge auch über die Größe der jeweiligen Öffnung oder auch Öffnungen beeinflussbar. In jedem Fall wird durch die Fremdluftmenge sichergestellt, dass die Fluidtemperatur am Eingang des zweiten Teilbereichs unterhalb der Maximaltemperatur gehalten wird.

Vorteilhafterweise ist die Temperaturmessung des Fluids mit der Anlagensteuerung verbunden, so dass bei Erreichen eines Grenzwertes der Temperatur, also einer Grenztemperatur, in irgendeiner Form ein Alarmgeber angesteuert wird. Dies kann beispielsweise die Aktivierung eines akustischen Alarms oder eines Blinkalarms, also eines optischen Alarms, oder der Ausgabe einer Meldung am Display der Anlagensteuerung sein. Bei der heute bekannten Technik ist es auch möglich, eine derartige Alarmmeldung innerhalb eines Firmennetzwerkes an bestimmte PC's weiterzuleiten oder sogar eine E-Mail an vorbestimmte Empfänger zu senden sowie eine SMS an ein Mobiltelefon zu verschicken. Selbstverständlich ist diese Grenztemperatur, ab der ein Alarm ausgelöst wird, im System hinterlegt. Dies kann ein vorgegebener Wert unterhalb der Maximaltemperatur sein oder ein mittels eines Faktors vom Maximalwert bestimmbarer Wert sein. Zwischen dieser Grenztemperatur und der Maximaltemperatur können bei Erreichen dieses Bereiches weitere Maßnahmen vom System ausgelöst werden. Fortbildungsgemäß ist in jedem Fall vorgesehen, dass beim Erreichen der Maximaltemperatur eine Notabschaltung der gesamten Anlage ausgelöst wird. Durch diese Maßnahme ist auf jeden Fall sichergestellt, falls alle vorher eingeleiteten Alarmfunktionen nicht gegriffen haben, die Anlage abzuschalten, bevor Schaden an Anlagen oder Personal entstehen kann. Bei den üblichen HDPE-Sorten PE 100 sollte praktischer Weise die Maximaltemperatur bei 150°C und die Grenztemperatur bei 130°C liegen, somit würde ab eine Temperatur des Fluids von 130°C ein Alarm ausgelöst und beim Erreichen einer Temperatur z.B. ab 145°C der Notaus der Anlage aktiviert werden.

Ist es nun erforderlich, dem erwärmten Fluid Fremdluft beizumischen, damit die Fluidtemperatur gesenkt wird, ist es notwendig, die Strömungsgeschwindigkeit des Fluids zu beeinflussen. Denn physikalisch bedingt verläuft der Luftstrom den Weg des geringsten Widerstandes. Wird nun ein Bypass, ein Absperrventil oder eine Klappe geöffnet, um Fremdluft zuströmen zu lassen, könnte dies bei gleich bleibender Strömungsgeschwindigkeit des Fluids dazu führen, dass weniger Fluid entgegen der Extrusionsrichtung entlang des Extrudates und/oder durch das Werkzeug gezogen wird, da hier der Strömungswiderstand größer ist als der im Bereich des Zuganges der Fremdluft. Um dies zu kompensieren kann die Strömungsgeschwindigkeit durch die Saugvorrichtung erhöht oder minimiert werden.

Wenn also z.B. zur Absenkung der Ablufttemperatur über das Absperrventil Fremdluft zu dem Luftstrom aus dem ersten Teilbereich hinzugeführt, also addiert wird, muss die Saugvorrichtung entsprechend des Anteiles an Fremdluft den Durchsatz erhöhen. Mit Hilfe einer zusätzlichen Volumenstrommessung im ersten Teilbereich oder des Fremdfluids kann die Saugvorrichtung, über eine entsprechende Steuer- und oder Regeltechnik, die Wärmemenge aus dem ersten Teilbereich trotz Zufluss von Fremdluft immer konstant halten.

Durch diese Regelung der Strömungsgeschwindigkeit des Fluids wird sichergestellt, dass die im ersten Teilbereich der Prozesskette, also die vom Extrudat und/oder Werkzeug abgegebene Wärmemenge weitgehend der am Ende der Prozesskette abgegebenen Wärmemenge entspricht. Durch das vorgeschlagene Verfahren kann zwar die Temperatur des Energieträgers, in diesem Fall der Luft bzw. des Fluids, der zur weiteren Verwendung einem anderen Prozess zugeführt wird, niedriger sein als die Fluidtemperatur die bei der Kühlung des Extrudates und des Werkzeuges, das durchströmende Fluid sein. Jedoch ist die Wärmemenge, die dem Energieträger in den Kühlprozess vom Extrudat und/oder dem Werkzeug übergeben wurde, weitgehend identisch der Wärmemenge, die an den Nachfolgeprozess übergeben wird. Besonders vorteilhaft ist es, wenn die Zuführung von weiterer Fremdluft gesteuert und/oder geregelt wird. Dieses ist möglich, wenn die Temperatur (T₃) und an der gleichen Stelle der Volumenstrom ermittelt wird. Damit wird das Fluid optimal für den Folgeprozess aufbereitet.

Es soll also mit der Erfindung erreicht werden, dass nicht nur die Schäden, sondern auch die Übernahme von sehr unterschiedlichen Energiemengen und Ausführungen ermöglicht werden. Das heißt, der Luftvolumenstrom kann sehr groß und die Temperatur aber relativ niedrig sein. Oder der Volumenstrom ist relativ klein aber die Temperatur sehr hoch. Da an einer Extrusionslinie kleine und große Rohre mit auch noch unterschiedlichen Durchsätzen gefahren werden, können sich auch unterschiedliche Temperaturen und Volumenströme ergeben. Des Weiteren muss der nachfolgende Prozess im Extremfall auch ganz ohne die Energie aus dem Extrusionsprozess auskommen. Dieses ist z.B. bei dem Start der Extrusionslinie der Fall. Zusammengefasst kann man sagen, dass der nachfolgende Prozess möglichst stufenlos die aus dem Extrusionsprosess zur Verfügung stehende Energie nutzen kann, und wenn diese zu viel wird, auch wieder abführen kann.

In den Zeichnungen wird schematisch eine erfindungsgemäße Vorrichtung gezeigt:
- Fig. 1: zeigt eine typische Extrusionslinie,
- Fig. 2: Teilbereiche der Prozesskette,
- Fig. 3: weitere Teilbereiche der Prozesskette und
- Fig. 4: den anschließenden Bereich des Vorwärm- und-Trocknungsprozesses

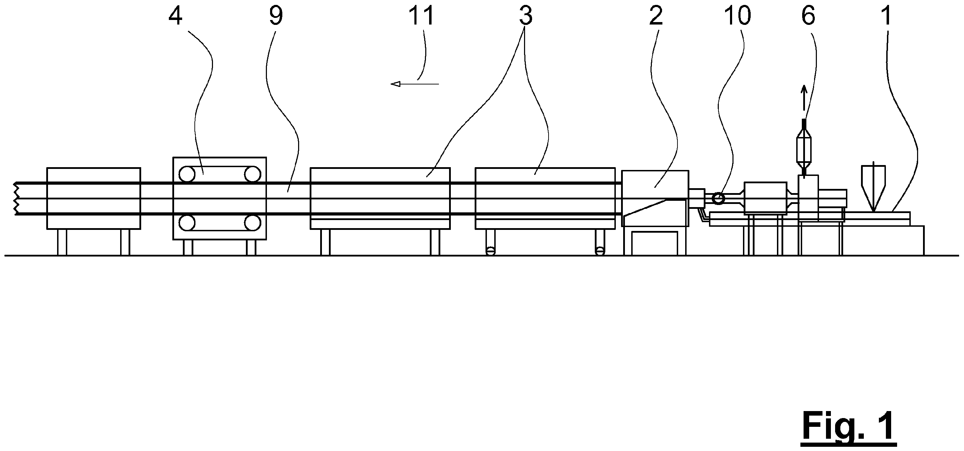

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrier- und Kühleinrichtung 3 an, je nach Profil können weitere Kühlstationen eingesetzt werden. Nach den Kühlstationen schließt sich eine Abzugsvorrichtung 4 an. Um die Endlosprofile 9 auf die gewünschte Länge abzuschneiden ist anschließend in der Regel (nicht dargestellt) eine Trennvorrichtung angeordnet. Entgegen der Extrusionsrichtung 11 wird mittels einer Saugvorrichtung 8 ein Fluid durch das Extrudat 9, hier ein Kunststoffrohr, und durch das Werkzeug 2 gezogen und über ein Verbindungsrohr einem Luftaustritt 6 zugeführt.

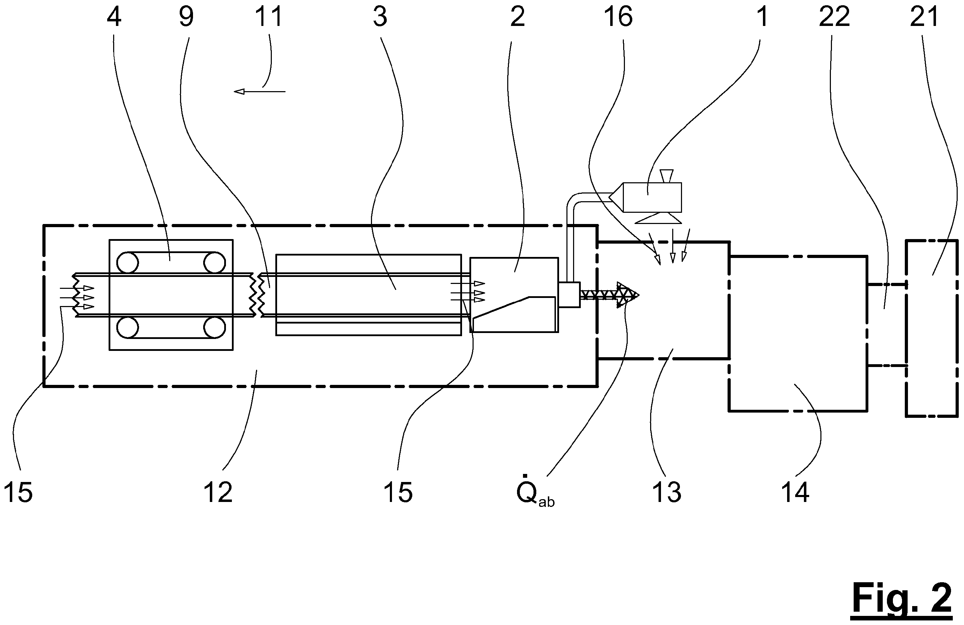

Figur 2 zeigt einen Teilbereich dieser Extrusionslinie. Zu erkennen ist wieder der Extruder 1, der die aufgeschmolzene Kunststoffmasse an ein Werkzeug 2 übergibt, in der ein Kunststoffrohr geformt wird. Die Formstabilität wird in der Kalibrier- und Kühlstation 3 geschaffen. Weitere Kühlstationen können sich anschließen, bis das formstabile Rohr über den Abzug 4 in Extrusionsrichtung 11 gefördert wird. Mittels einer strichpunktierten Linie wird ein erster Teilbereich 12 dieser Prozesskette markiert. Dieser Teilbereich umfasst mindestens das Werkzeug 2, die Kühl- und Kalibrierstation 3 sowie den Abzug 4. Durch diesen ersten Teilbereich wird entgegen der Extrusionsrichtung 11 ein Fluid 15, in der Regel Umgebungsluft, entlang der Wandung, dies kann die Innen- oder Außenwandung sein, des Kunststoffrohres gefördert, wobei der Luftstrom das Werkzeug 2 oder Teilbereiche des Werkzeuges 2 ebenfalls umströmen kann. In diesem Teilbereich 12 wird dem Luftstrom 15 Energie in Form von Wärme übergeben. Diese Wärmemenge ist symbolisch mit einem dicken Pfeil als *Q̇_{ab}* gekennzeichnet. Diese Wärmemenge *Q̇_{ab}* wird einem zweiten Teilbereich 14, hier durch eine strichpunktierte Blackbox gekennzeichnet, übergeben. Zwischen dem ersten Teilbereich 12 und dem zweiten Teilbereich 14 befindet sich ein Verbindungsbereich 13. Innerhalb dieses Verbindungsbereiches 13 kann dem Fluid 15 ein Fremdfluid 16 zugefügt werden. An den Teilbereich 14 schließt sich der Übergangsbereich 22 und der Vorwärm- und/oder Trocknungsbereich 21 an.

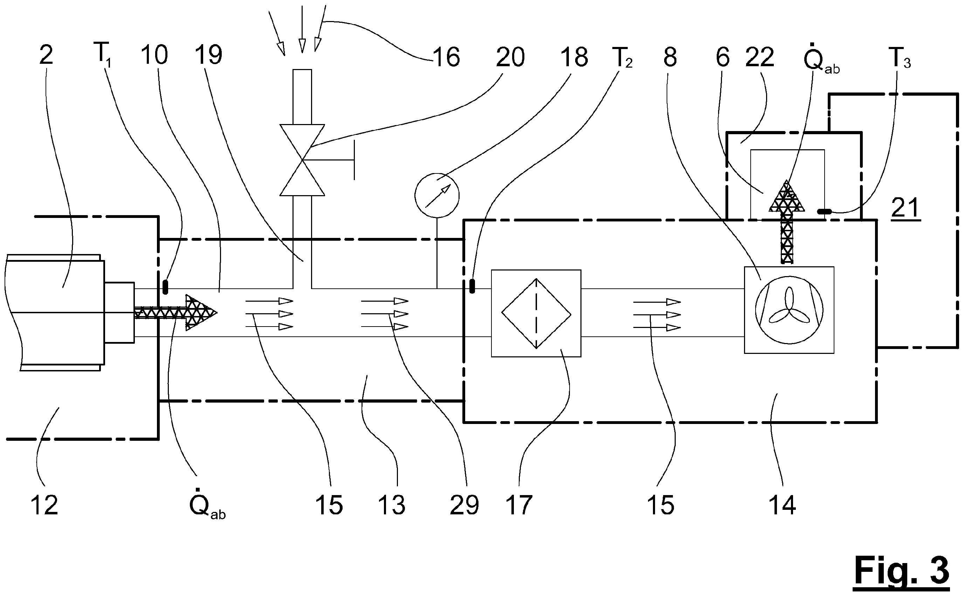

Figur 3 schließt sich quasi an Figur 2 an. Der Teilbereich 12 mit dem Werkzeug 2 ist schematisch leicht angedeutet, der dicke Pfeil symbolisiert wieder die vom ersten Teilbereich 12 abgegebene Wärmemenge *Q_{ab}.* Das Fluid 15 durchströmt in einem Verbindungsrohr 10 den Verbindungsbereich 13. Das Verbindungsrohr 10 steht mit einem Fremdluftkanal 19 in Verbindung, über den Fremdluft 16 angesaugt werden kann. Die Menge der Fremdluft 16 wird über ein Absperrventil 20 geregelt. Wie bereits weiter oben beschrieben, kann die Menge von einfachen manuell bedienbaren Schiebern bis hin zu komplexen Anlagensteuerungen gesteuert oder geregelt werden. Über eine Temperaturmesseinrichtung 18 kann die Temperatur des Fluids am Ende des Verbindungsbereiches 13 und somit am Eingang des Teilbereiches 14 gemessen werden. Hiermit wird also sichergestellt, dass die in den Teilbereich 14 übergebene Luft niemals den Maximalwert erreicht. Bei dieser vorgeschlagenen Vorrichtung kann die Fluidtemperatur am Anfang des Verbindungsbereiches 13 zusätzlich gemessen werden, wodurch die temperaturabhängige Steuerung und Regelung der Fremdluft 16 ermöglicht wird.

In dem gemäß Figur 3 dargestellten Beispiel wird das Fluid im Teilbereich 14 zunächst durch einen Filter 17 geführt und dann dem Luftaustritt 6 zugeführt. An diesem Luftaustritt 6 schließen sich dann weitere Prozesse an, die die in der beschriebenen Prozesskette abgeführte Wärmemenge *Q̇_{ab}* nutzen. Dieser Bereich 21 ist schematisch durch eine Strichpunktlinie verdeutlicht. Die Strichpunktlinie um den Bereich 22 symbolisiert einen Übergansbereich. An den Teilbereich 14 schließt sich wieder der Übergangsbereich 22 und der Vorwärm- und/oder Trocknungsbereich 21 an.

Zur Durchführung des gesamten Verfahrens ist eine hier schematisch dargestellte Saugeinrichtung 8 erforderlich, die das Fluid 15 durch die gesamte Prozesskette saugt. Vorteilhafterweise ist auch die Saugvorrichtung 8 mit der Anlagensteuerung verbunden, bei der auch die Fluidtemperaturen als Prozessgrößen eingehen und somit über die Steuerung und somit einerseits über das Absperrventil 20 die zuzuführende Menge an Fremdluft 16, andererseits auch die Strömungsgeschwindigkeit des Fluids 15 über die Saugeinrichtung 8 z.B. mittels eines Ventilators gesteuert und geregelt werden kann.

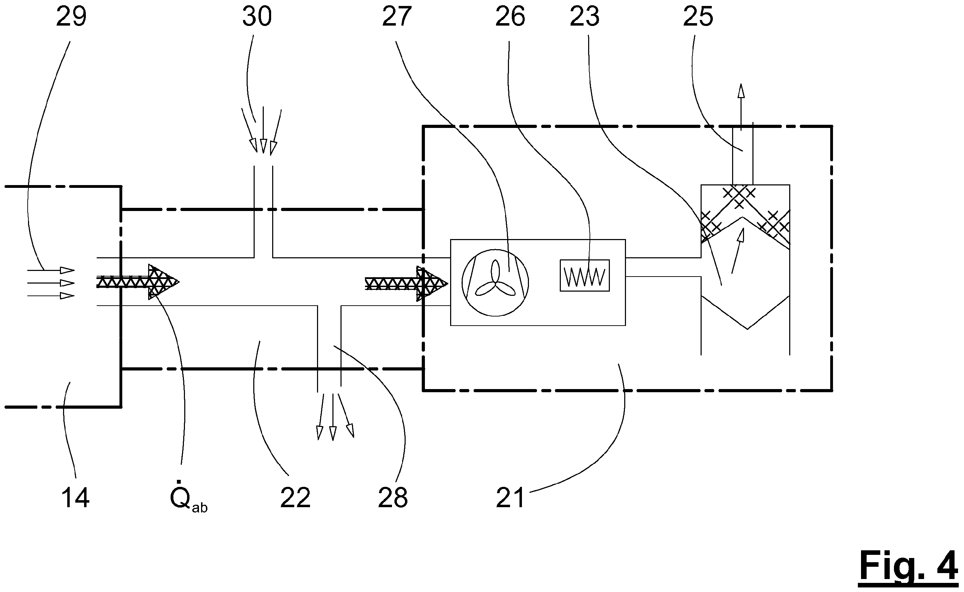

Figur 4 verdeutlicht das Schema der genutzten Wärmemenge. Aus dem zweiten Teilbereich 14 gelangt die Wärmemenge *Q̇_{ab}* mittels des Mischfluids 29, also das erwärmte Fluid 15 inklusive eventuellem Fremdfluids 16, in einen Übergangsbereich 22. Je nachdem welche Fluidparameter für die weitere Verwendung im Vorwärm- und Trocknungsprozess erforderlichen sind, kann im Übergangsbereich 22 über eine Ablassöffnung 28 Fluid abgeführt werden oder auch weiteres Fremdfluid 30 zugeführt werden bevor es an den Prozess des Vorwärm- und/oder Trocknens übergeben wird.
Der Vorwärm- und/oder Trocknungsprozess ist als gesamter Prozessbereich mit der Strichpunktlinie 21 gekennzeichnet. In diesem Gesamtprozess ist mindestens eine Vorwärm- und/oder Trocknungseinheit, hier beispielhaft als Silo 23 dargestellt, vorhanden. Erfindungsgemäss ist eine zusätzliche Fluidaufbereitung 24 vorgesehen, die einen Zusatzventilator 27 und eine Zusatzheizung 26 umfasst. Hierüber wird bei Bedarf die Strömungsgeschwindigkeit und/oder die Temperatur des Fluids erhöht, sofern das für den Vorwärm- und/oder Trocknungsprozess erforderlich ist.

### Bezugszeichenliste:

- 1: Extruder
- 2: Extrusionswerkzeug
- 3: Kalibrier- und Kühleinrichtung
- 4: Abzugsvorrichtung
- 5: Trennvorrichtung
- 6: Luftaustritt
- 7: Filter
- 8: Saugvorrichtung
- 9: Kunststoffprofil
- 10: Verbindungsrohr
- 11: Extrusionsrichtung
- 12: erster Teilbereich
- 13: Verbindungsbereich
- 14: zweiter Teilbereich
- 15: Fluid
- 16: Fremdfluid
- 17: Filter
- 18: Temperaturmesseinrichtung
- 19: Fremdluftkanal
- 20: Absperrventil
- 21: Vorwärm- und/oder Trocknungsprozess
- 22: Übergangsbereich zwischen 14 und 21
- 23: Trockensilo
- 24: zusätzliche Fluidaufbereitung
- 25: Luftaustritt 2
- 26: Zusatzheizung in 24
- 27: Zusatzventilator
- 28: Ablassöffnung
- 29: Mischfluid aus 15 und 16
- 30: weiteres Fremdfluid

- *v̇*: Strömungsgeschwindigkeit von 15 und 16
- *Q̇_{ab}*: Wärmemenge
- T₁: Temperatur am Ausgang von 12
- T₂: Temperatur am Eingang zu 13
- T₃: Temperatur am Ausgang von 14
- Tₘₐₓ: Maximaltemperatur

## Patentansprüche

1. Verfahren zum Nutzen der bei einem Extrusionsprozess während des Abkühlvorganges vom Extrudat (9) abgegebenen Wärmemenge (*Q̇_{ab}*) zum Trocknen oder Vorwärmen von Kunststoffgranulat, wobei ein Fluid, insbesondere Luft, entgegen der Extrusionsrichtung (11) entlang des Extrudats (9) und/oder durch das Werkzeug (2) geführt wird,
mindestens ein Teil der Wärme vom Extrudat (9) und/oder dem Werkzeug (2) an das Fluid (15) übertragen wird,
das erwärmte Fluid (15) aus einem ersten Teilbereich (12) der Prozesskette, umfassend wenigstens ein Werkzeug (2), eine Kalibrier- und Kühleinrichtung (3) und eine Abzugsvorrichtung (4),
über einen Verbindungsbereich (13), vorzugsweise bestehend aus wenigstens einem Verbindungsrohr (10),
einem zweiten Teilbereich (14) der Prozesskette, umfassend wenigstens eine Saugvorrichtung (8), zugeführt wird,
**dadurch gekennzeichnet, dass**
die Temperatur (T) des erwärmten Fluids (15) einen vorbestimmten Maximalwert (Tₘₐₓ) nicht überschreitet,
wobei im Verbindungsbereich (13) ein Fremdfluid (16) dem erwärmten Fluid (15) zumischbar ist, wodurch ein Mischfluid (29) entsteht, um die Isttemperatur des erwärmten Fluids (15) mindestens unter den vorgegebenen Maximalwert zu senken, bevor es dem zweiten Teilbereich (14) der Prozesskette zugeführt wird,
wobei sich an den zweiten Teilbereich (14) ein Vorwärm- und/oder Trocknungsprozess (21) anschließt,
wobei aus dem zweiten Teilbereich (14) die abgegebene Wärmemenge (*Q̇_{ab}*) mittels des Mischfluids (29) in einen Übergangsbereich (22 zwischen dem zweiten Teilbereich (14) und dem Trocknungsprozess (21), gelangt,
wobei im Übergangsbereich (22) die
keit (*v̇*) und die Temperatur des Mischfluids (29) senkbar sind,
wobei über einen Zusatzventilator (27) und eine Zusatzheizung (26) bei Bedarf die Strömungsgeschwindigkeit und/oder die Temperatur des Mischfluids (29) erhöht werden, sofern das für den Vorwärm- und/oder Trocknungsprozess erforderlich ist.

2. Verfahren nach Anspruch 1, **dadurch gekennzeichnet, dass** über eine Temperaturmesseinrichtung (18) die Fluidtemperatur (T₂) gemessen wird, bevor das erwärmte Fluid (15) dem zweiten Teilbereich (14) der Prozesskette zugeführt wird und/oder zusätzlich die Fluidtemperatur (T₁) am Ausgang des ersten Teilbereichs (12) gemessen wird.

3. Verfahren nach Anspruch 2, **dadurch gekennzeichnet, dass** über ein Absperrventil (20) die Menge des Fremdfluids (16) beeinflusst wird.

4. Verfahren nach Anspruch 3, **dadurch gekennzeichnet, dass** in Abhängigkeit der Fluidtemperatur (T₁) am Ausgang des ersten Teilbereichs (12) die Menge an Fremdfluid (16) gesteuert und/oder geregelt wird, um die Fluidtemperatur (T₂) am Eingang des zweiten Teilbereiches (14) unterhalb der Maximaltemperatur (Tₘₐₓ) zu halten.

5. Verfahren nach einem der vorigen Ansprüche, **dadurch gekennzeichnet, dass** beim Erreichen einer Grenztemperatur, die bei einem vorgegebenen Wert unterhalb der Maximaltemperatur (Tₘₐₓ) liegt, ein Alarmgeber angesteuert wird, oder dass beim Erreichen der Maximaltemperatur (Tₘₐₓ) eine Notabschaltung der Anlage ausgelöst wird.

6. Verfahren nach einem der vorigen Ansprüche, **dadurch gekennzeichnet, dass** die Strömungsgeschwindigkeit des Mischfluids (29) durch die Saugvorrichtung (8) erhöht oder minimiert wird.

7. Verfahren nach einem der vorigen Ansprüche, **dadurch gekennzeichnet, dass** die vom ersten Teilbereich (12) der Prozesskette abgegebene Wärmemenge (*Q̇_{ab}*) weitgehend der am Ende der Prozesskette vom zweiten Teilbereich (14) abgegebenen Wärmemenge (*Q̇_{ab}*) entspricht.

8. Verfahren nach einem der Ansprüche 6 bis 7, **dadurch gekennzeichnet, dass** der Volumenstrom des erwärmten Fluids (15) und/oder der Volumenstrom des Fremdfluids (16) gemessen werden.

9. Verfahren nach Anspruch 8, **dadurch gekennzeichnet, dass** die Saugleistung der Saugvorrichtung (8) in Abhängigkeit der Volumenstrommessung des erwärmten Fluids (15) und des Fremdfluids (16) gesteuert und/oder geregelt wird.

10. Verfahren nach einem der vorigen Ansprüche, **dadurch gekennzeichnet, dass** im Übergangsbereich (22) weiteres Fremdfluid (30) zumischbar oder erwärmtes Fluid (15) ablassbar ist.

## Claims

1. Method of using the heat quantity (*Q̇_{ab}*) released by the extrudate (9) during the cooling process within a process of extrusion for drying and preheating plastic granulate,
a fluid, especially air, being guided along the extrudate (9) and/or through the tool (2) counter to the direction of extrusion (11),
at least part of the heat released by the extrudate (9) and/or the tool (2) being transmitted to the fluid (15),
the heated fluid (15) being ducted from a first section (12) of the process chain comprising at least a tool (2), a calibration and cooling device (3) and an extraction device (4),
via a connecting area (13), preferably consisting of at least one connecting pipe (10),
into a second section (14) of the process chain comprising at least one suction device (8),
**characterized in that**
the temperature (T) of the heated fluid (15) does not exceed a predetermined maximum value (Tₘₐₓ),
an external fluid (16) being able to be mixed with the heated fluid (15) within the connecting area (13), thus creating a fluid mixture (29) to reduce the actual temperature of the heated fluid at least below the predetermined maximum value before ducting it into the second section (14) of the process chain,
a pre-heating and/or drying process (21) being arranged downstream of the second section (14),
the released heat quantity (*Q̇_{ab}*) flowing in the form of the fluid mixture (29) from the second section (14) into a transition zone (22) between the second section (14) and the drying process (21),
the flow velocity (*v̇*) and the temperature of the fluid mixture (29) being able to be reduced within the transition zone (22),
an extra fan (27) and an additional heating (26) allowing for the flow velocity (*v̇*) and/or the temperature of the fluid mixture (29) to be increased, provided that this be necessary for the pre-heating and/or drying process (21).

2. Process according to claim 1, **characterized in that** the temperature of the fluid (T₂) is measured by a temperature-measuring device (18), before the heated fluid (15) is ducted into the second section (14) of the process chain and/or the temperature of the fluid (T₁) is additionally measured at the exit from the first section (12).

3. Process according to claim 2, **characterized in that** the amount of the external fluid (16) is controlled by means of an isolating valve (20).

4. Process according to claim 3, **characterized in that** the amount of the external fluid (16) is controlled and/or regulated depending on the temperature of the fluid (T₁) at the exit from the first section (12) in order to keep the temperature of the fluid (T₂) at the entry to the second section (14) below the maximum temperature (Tₘₐₓ).

5. Process according to one of the preceding claims, **characterized in that** on reaching a limit temperature of a predetermined value below the maximum temperature (Tₘₐₓ) a means of alarm is activated or that an emergency stop of the system is initiated.

6. Process according to one of the preceding claims, **characterized in that** the flow velocity of the fluid mixture (29) is increased of reduced by means of the suction device (8)

7. Process according to one of the preceding claims, **characterized in that** the heat quantity (*Q̇_{ab}*) released from the first section (12) of the process chain widely meets the heat quantity (*Q̇_{ab}*) released at the end of the process chain of the second section (14)

8. Process according to one of the claims 6 to 7, **characterized in that** the volume flow rate of the heated fluid (15) and/or the flow rate of the external fluid (16) are being measured.

9. Process according to claim 8, **characterized in that** the suction capacity of the suction device (8) is controlled and/or regulated depending on the volume flow rate measurement of the heated fluid (15) and the external fluid (16).

10. Process according to one of the preceding claims, **characterized in that** further external fluid (30) can be added or heated fluid (15) released in the transition zone (22).

## Revendications

1. Méthode à utiliser la quantité de chaleur (*Q̇_{ab}*) diffusée par le produit d'extrusion (9) lors du processus de refroidissement dans un procédé d'extrusion pour le séchage ou le préchauffage d'un granulé de matière plastique,
un fluide, de l'air en particulier, étant fait passer dans le sens opposé à la direction d'extrusion (11) le long du produit d'extrusion (9) et/ou à travers l'outil (2),
au moins une partie de la chaleur étant transmise du produit d'extrusion (9) et/ou de l'outil (2) au fluide,
le fluide chauffé (15) étant fait passer d'un premier secteur (12) de la chaîne des processus comprenant au moins un outil (2), un dispositif de calibrage et de refroidissement (3) et un dispositif d'extraction (4)
à travers une zone de jonction (13), de préférence composé d'au moins un tube de raccordement (10),
à un deuxième secteur (14) de la chaîne des processus comprenant au moins un dispositif d'aspiration (8),
**caractérisée en ce que**
la température (T) du fluide chauffé (15) ne dépasse pas une valeur maximale (Tₘₐₓ) prédéterminée,
un fluide étranger (16) pouvant être mélangé avec le fluide chauffé (15) dans la zone de jonction (13), créant un fluide mixte (29) afin de réduire la température réelle du fluide chauffé (15) sous la valeur maximale prédéterminée avant de le faire passer au deuxième secteur (14) de la chaîne des processus,
un processus de préchauffage et/ou de séchage (21) étant arrangé en aval dudit deuxième secteur (14),
la quantité de chaleur (*Q̇_{ab}*) diffusée étant faite passer par voie du fluide mixte (29) du deuxième secteur (14) dans une zone de transition (22) située entre le deuxième secteur (14) et le processus de séchage (21),
la vitesse d'écoulement (*v̇*) et la température du fluide mixte (29) pouvant être réduites dans ladite zone de transition (22),
la vitesse d'écoulement (*v̇*) et/ou la température du fluide mixte (29) étant augmentées au besoin via un ventilateur supplémentaire (27) et un chauffage additionnel (26), à condition que ce soit nécessaire pour le processus de préchauffage et/ou de séchage.

2. Méthode selon la revendication 1, **caractérisée en ce que** la température du fluide (T₂) est mesurée au moyen d'un dispositif de mesure de température (18) avant que le fluide chauffé (15) soit fait passer au deuxième secteur (14) de la chaîne des processus et/ou que la température du fluide (T₁) est mesurée en outre à l'issue du premier secteur (12).

3. Méthode selon la revendication 2, **caractérisée en ce que** le volume du fluide étranger (16) est contrôlé au moyen d'une vanne d'arrêt (20).

4. Méthode selon la revendication 3, **caractérisée en ce que** le volume du fluide étranger (16) est contrôlé et/ou régulé en fonction de la température du fluide (T₁) à l'issue du premier secteur (12) afin de maintenir la température du fluide (T₂) à l'entrée dans le deuxième secteur (14) au-dessous de la température maximale.

5. Méthode selon l'une quelconque des revendications précédentes,
**caractérisée en ce qu'**un émetteur d'alarme est activé lorsqu'une température limite, qui est au-dessous du niveau de la température maximale (Tₘₐₓ), est atteinte ou qu'un arrêt d'urgence du système est initié lorsque la température maximale (Tₘₐₓ) est atteinte.

6. Méthode selon l'une quelconque des revendications précédentes,
**caractérisée en ce que** la vitesse d'écoulement (*v̇*) du fluide mixte (29) est augmentée ou réduite au moyen du dispositif d'aspiration (8).

7. Méthode selon l'une quelconque des revendications précédentes,
**caractérisée en ce que** la quantité de chaleur (*Q̇_{ab}*) diffusée dans le premier secteur (12) de la chaîne des processus correspond largement à la quantité de chaleur (*Q̇_{ab}*) diffusée dans le deuxième secteur (14).

8. Méthode selon l'une quelconque des revendications 6 et 7, **caractérisée en ce que** le flux volumique du fluide chauffé (15) et/ou le flux volumique du fluide étranger (16) sont mesurés.

9. Méthode selon la revendication 8, **caractérisée en ce que** la puissance d'aspiration du dispositif d'aspiration (8) est contrôlée et/ou régulée en fonction de la mesure du flux volumique du fluide chauffé (15) et du fluide étranger (16).

10. Méthode selon l'une quelconque des revendications précédentes,
**caractérisée en ce qu'**un autre fluide étranger (30) peut être ajouté ou que du fluide chauffé (15) peut être évacué.
